# EUROPÄISCHE PATENTANMELDUNG

(11) **EP 1 653 589 A2**
(43) Veröffentlichungstag der Anmeldung: **03.05.2006**
(21) Anmeldenummer: 05109996.8
(22) Anmeldetag: 26.10.2005
(51) Int. Cl.: H02K 3/34, H02K 3/40

(54) **Vorrichtung zur Isolierung eines elektrischen Leiters**

(30) Priorität: 01.11.2004 CH 18042004
(71) Anmelder: Alstom Technology Ltd, 5400 Baden (CH)
(72) Erfinder: Baumann, Thomas, 5430, Wettingen (CH)

(57) **Zusammenfassung**

Die Erfindung betrifft eine Isolierungsvorrichtung (4) zur Isolierung eines elektrischen Leiters (3), mit einem nicht gewebten Trägermaterial (6), welches aus Fasern (9) hergestellt ist, wobei das Trägermaterial (6) elektrisch isolierend ausgebildet ist und eine glimmerhaltige Beschichtung (7) aufweist.

## Beschreibung

### Technisches Gebiet

Die vorliegende Erfindung betrifft eine Vorrichtung zur Isolierung eines elektrischen Leiters.

### Stand der Technik

Rotierende elektrische Maschinen, wie beispielsweise Generatoren, weisen üblicherweise einen sich drehenden Rotor und einen lagefixierten Stator auf, wobei sowohl der Rotor als auch der Stator jeweils eine Vielzahl von aus elektrisch leitendem Material gebildeten Wicklungen aufweisen. Sowohl die statorseitigen als auch die rotorseitigen Wicklungen sind dabei von elektrischem Strom durchflossen. Um Kurzschlüsse zu vermeiden müssen die Wicklungen des Stators bzw. des Rotors elektrisch isoliert sein. Herkömmliche Isolatoren sind beispielsweise aus Kunststoffen oder aus einem nicht leitenden glasfaserhaltigen Gewebe mit einer darauf angeordneten Glimmerschicht ausgeführt.

### Darstellung der Erfindung

Hier setzt die vorliegende Erfindung an. Die Erfindung, wie sie in den Ansprüchen gekennzeichnet ist, beschäftigt sich mit dem Problem, für eine Vorrichtung der eingangs erwähnten Art eine verbesserte Ausführungsform anzugeben, mit der sich insbesondere eine effektive Isolierung eines elektrischen Leiters kostengünstig und bezüglich seiner Abmessung leicht anpassbar realisieren lässt.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Vorrichtung zur Isolierung eines elektrischen Leiters aus einem nicht gewebten, elektrisch isolierenden und fasrigen Trägermaterial herzustellen, auf welches eine glimmerhaltige Beschichtung aufgebracht ist. Die Beschichtung besteht dabei teilweise oder vollständig aus Glimmerteilchen, die in der Regel schuppenförmig vorliegen und daher auch als Glimmerschüppchen bezeichnet werden. Das nicht gewebte und aus Fasern hergestellte Trägermaterial (nonwoven-material) bietet den großen Vorteil, dass es bezüglich gewebter Trägermaterialien deutlich kostengünstiger herzustellen ist und sich zudem einfach schneiden und drapieren bzw. in Form bringen lässt, ohne dass es an den Rändern ausfranst. Darüber hinaus ist auch die leichte Anpassbarkeit der erforderlichen Isolierbänder hinsichtlich ihrer Breite gegeben, da diese leicht mittels einer Schneidemaschine in die gewünschte Breite geschnitten werden können, gleichzeitig aber stets einen scharfen und unausgefransten Rand aufweisen, welcher eine zuverlässige und qualitativ hochwertige Isolierung des Bauteils zulässt.

Gemäß einer ersten Ausführungsform der erfindungsgemäßen Lösung ist die glimmerhaltige Beschichtung ein Glimmerpapier. Glimmerpapier besteht regelmäßig aus in der Papierebene angeordneten Glimmerschüppchen und gegebenenfalls aus einem geeigneten Bindemittel, das z.B. organischen Ursprungs sein kann. Durch das Glimmerpapier kann eine besonders zuverlässige Isolierung bereit gestellt werden, da das Glimmermaterial auch bei Fehlstellen in der Isolierung (z.B. Hohlräume) einen Durchschlag verhindert.

Zweckmäßig werden die Fasern des Trägermaterials von einem Binder zusammengehalten. Dabei kann die Bindung der Fasern beispielsweise als thermische und/oder chemische Bindung erfolgen. Dies ermöglicht einen auf den jeweiligen Anwendungsfall ausgerichteten Einsatz des Binders und dadurch eine besonders hohe Flexibilität hinsichtlich der verwendeten Binder bzw. Werkstoffe.

Bei einer weiteren Ausführungsform der Erfindung weist das Trägermaterial Polyesterfasern auf. Polyesterfasern sind in nahezu jeglicher Größe und Abmessung kostengünstig herstellbar und leicht mittels chemischem Binder zum nicht gewobenen Trägermaterial zu verbinden. Denkbar ist hierbei aber auch eine thermische Verbindung, bei welcher der Polyester zum Verbinden erhitzt wird. Da Polyesterfasern kostengünstig herzustellen sind, lässt sich somit auch eine kostengünstige Herstellung der Glimmschutzvorrichtung realisieren.

Zweckmäßig ist die glimmerhaltige Beschichtung mit dem Trägermaterial kalandriert und/oder verklebt. Beim Kalandrieren erfolgt ein Walzen und Erwärmen der zu verbindenden Komponenten, hier also dem Trägermaterial und der glimmerhaltigen Beschichtung. Zum Einsatz kann hierbei beispielsweise ein Streukleber kommen, der an vorher definierten Stellen des Glimmerpapiers und/oder des Trägermaterials aufgetragen wird. Denkbar ist darüber hinaus auch ein Bestreichen des Trägermaterials und/oder der Beschichtung mit lediglich einer Komponente eines Zweikomponenten-Reaktionsharzes. Die zweite Komponente kann hierbei z.B. im nachfolgend aufgetragenen Imprägnierharz enthalten sein.

Weitere Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: einen elektrischen Leiter im Bereich einer Nut eines Stators mit einer erfindungsgemäßen Vorrichtung zur Isolierung des Leiters,
- Fig. 2: einen Querschnitt durch den elektrischen Leiter mit einer erfindungsgemäßen Isolierungsvorrichtung,
- Fig. 3: eine teilweise geschnittene Ansicht auf die beschichtete Seite der Isolierungsvorrichtung.

### Wege zur Ausführung der Erfindung

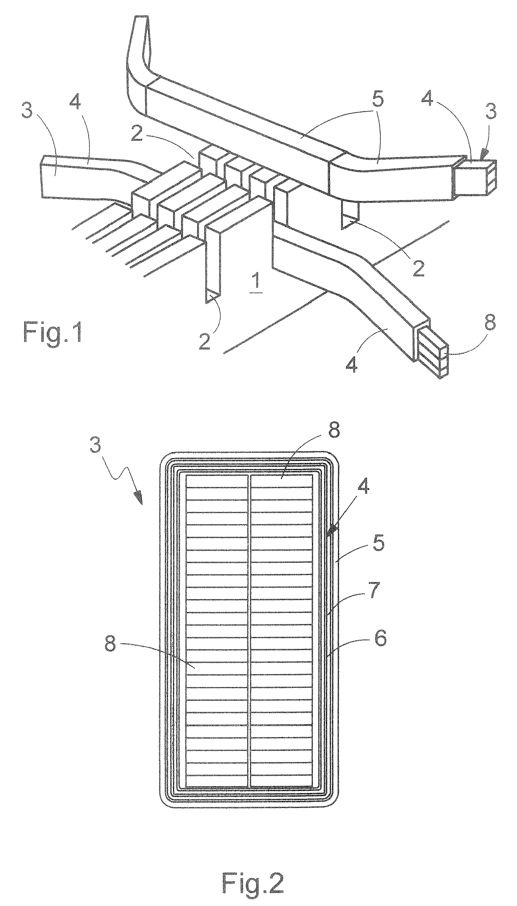

Entsprechend Fig. 1 weist ein Stator 1 mehrere Nuten 2 auf, durch welche jeweils zumindest ein elektrischer Leiter 3 verläuft. Der Stator 1 kann beispielsweise aus Eisen und damit elektrisch leitend und magnetisch ausgebildet und Teil eines nicht gezeigten Generators und/oder Elektromotors sein. Um einen Übergang des im elektrischen Leiter 3 fließenden Stroms auf den Stator 1 zu vermeiden, ist der Leiter 3 mit einer Isolierungsvorrichtung 4 versehen, welche einen hohen elektrischen Widerstand aufweist. Die Isolierungsvorrichtung 4 kann auch kurz mit Isolierung 4 benannt werden.

Gemäß Fig. 2 weist der elektrische Leiter 3 mehrere Teilleiter 8 auf, welche paketartig zusammengefasst und von der Isolierung 4 umschlossen sind. Um eine äußere Oberfläche der Isolierung 4 ist dabei ein Glimmschutz 5 angebracht, vorzugsweise gewickelt, und zwar hier in Form eines Außenglimmschutzes, der aus einem Nutglimmschutz und aus einem Bügelglimmschutz besteht. Je nach gewünschter Isolierwirkung kann die Isolierungsvorrichtung 4 mehrlagig und in der Breite überlappend um den Leiter 3 gewickelt sein.

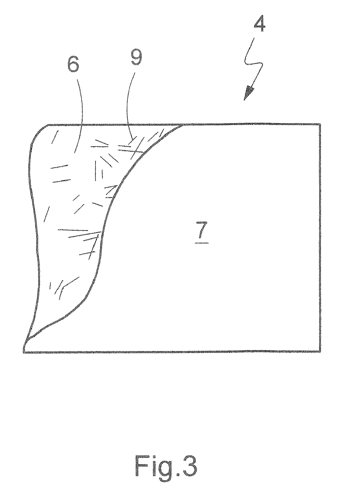

Die Isolierungsvorrichtung 4 oder Isolierung 4 weist ein nicht gewobenes Trägermaterial 6 auf, welches aus Fasern 9 hergestellt, elektrisch isolierend ausgebildet ist und eine glimmerhaltige Beschichtung 7 besitzt (vgl. Fig. 3). Die glimmerhaltige Beschichtung 7 kann beispielsweise als Glimmerpapier ausgebildet sein. Dies bietet die Möglichkeit, die Beschichtung 7 in einem Kalandrierverfahren auf das Trägermaterial 6 aufzubringen. Durch das Kalandrieren kann die Isolierungsvorrichtung 4 mit hoher Qualität und zudem kostengünstig hergestellt werden. Das Glimmerpapier besteht vorzugsweise aus vielen kleinen Glimmerschuppen bzw. Glimmerschüppchen, die in der jeweiligen Papierebene angeordnet sind. Außerdem kann für den Zusammenhalt ein Bindemittel, insbesondere ein organisches Bindemittel, vorgesehen sein.

Wie in Fig. 3 weiter gezeigt ist, können die Fasern 9 im nicht gewobenen Trägermaterial 6 ungerichtet sein, wodurch im wesentlichen isotrope Eigenschaften, insbesondere im Hinblick auf eine Zugfestigkeit, gewährleistet werden können. Denkbar ist hierbei jedoch auch, dass die Fasern 9 zumindest teilweise gerichtet sind und dadurch das Trägermaterial 6 anisotrope Eigenschaften aufweist. Beispielsweise kann eine Faserorientierung in Maschinenrichtung vorteilhaft sein. Als Fasern 9 kommen beispielsweise Polyesterfasern in Frage, welche einerseits kostengünstig herzustellen sind und andererseits einfach bearbeitet werden können. Generell kommen alle isolierenden Glas-, Mineral- oder Kunststofffasern in Betracht. Je nach eingesetzten Fasern 9 lassen sich unterschiedliche Flächengewichte von ca. 30 g/m² bis zu mehreren 100 g/m² realisieren.

Um eine gewisse Zugbelastung in der Ebene des Trägermaterials 6 zu gewährleisten, werden die Fasern 9 von einem Binder zusammengehalten. Ein derartiger Binder kann beispielsweise ein Reaktionsharz sein und/oder ein anderer chemisch aktivierbarer Kleber. Selbstverständlich ist auch vorstellbar, dass die Fasern 9 durch Erhitzen in einem thermischen Verbindungsprozess miteinander verbunden werden.

Durch den Einsatz des erfindungsgemäßen nicht gewobenen Trägermaterials 6 mit der darauf angeordneten Beschichtung 7 kann die Isoliervorrichtung 4 nicht nur kostengünstig hergestellt werden, sie bietet auch die Möglichkeit, einfach und exakt in unterschiedlich breite Streifen geschnitten zu werden. Im Unterschied zu Isolierbändern mit einem gewobenen Trägermaterial, welches beim Schneiden randseitig ausfransen kann, verbleibt bei der erfindungsgemäßen Isolierungsvorrichtung 4 auch nach dem Schneiden ein exakter und scharfer Rand, der keinerlei Ausfransungsneigungen zeigt.

Durch die problemlose Schneidbarkeit des nicht gewebten Trägermaterials 6 ist auch denkbar, zunächst ein Breitbahnträgermaterial herzustellen und zu beschichten und dieses anschließend bedarfsgerecht und kostensparend zuzuschneiden. Eine vorherige Festlegung einer Breite des Isolierbandes ist daher nicht erforderlich. Außerdem lässt sich aufgrund der vergleichsweise geringen Dicke der erfindungsgemäßen Isolierungsvorrichtung 4 von ca. 0,2 mm eine mehrlagige Schicht um den Leiter 3 legen.

### Bezugszeichenliste

- 1: Stator
- 2: Nut
- 3: elektrischer Leiter
- 4: Isolierung/Isolierungsvorrichtung
- 5: Glimmschutz
- 6: Trägermaterial
- 7: Beschichtung
- 8: Teilleiter
- 9: Fasern

## Patentansprüche

1. Vorrichtung (4) zur Isolierung eines elektrischen Leiters (3),
- mit einem nicht gewebten Trägermaterial (6), welches aus Fasern (9) hergestellt ist,
- wobei das Trägermaterial (6) elektrisch isolierend ausgebildet ist und eine glimmerhaltige Beschichtung (7) aufweist.

2. Vorrichtung nach Anspruch 1, **dadurch gekennzeichnet, dass** die glimmerhaltige Beschichtung (7) ein Glimmerpapier ist.

3. Vorrichtung nach Anspruch 2, **dadurch gekennzeichnet, dass** das Glimmpapier in einer Papierebene liegende oder angeordnete Glimmerteilchen oder Glimmerschüppchen aufweist.

4. Vorrichtung nach einem der Ansprüche 1 bis 3, **dadurch gekennzeichnet, dass** die glimmerhaltige Beschichtung (7) mit dem Trägermaterial (6) kalandriert und/oder verklebt ist.

5. Vorrichtung nach einem der Ansprüche 1 bis 4, **dadurch gekennzeichnet, dass** das Trägermaterial (6) vliesartig ausgebildet ist.

6. Vorrichtung nach einem der Ansprüche 1 bis 5, **dadurch gekennzeichnet, dass** das Trägermaterial (6) ein Gewicht von kleiner als 100 g/m² aufweist.

7. Vorrichtung nach einem der Ansprüche 1 bis 6, **dadurch gekennzeichnet, dass** das Trägermaterial (6) Polyesterfasern oder Mischfasern aus Glas oder Polyester aufweist.

8. Vorrichtung nach einem der Ansprüche 1 bis 7, **dadurch gekennzeichnet, dass** die Fasern (9) des Trägermaterials (6) von einem Binder zusammengehalten werden.

9. Vorrichtung nach einem der Ansprüche 1 bis 8, **dadurch gekennzeichnet, dass** die Fasern des Fasermaterials (6) eine Vorzugsorientierung aufweisen.

10. Vorrichtung nach Anspruch 9, **dadurch gekennzeichnet, dass** die Vorzugsorientierung auf eine Maschinenrichtung ausgerichtet ist.

11. Verwendung eines nichtgewebten Materials als Trägermaterial (6) für eine glimmerhaltige Beschichtung (7) in einer Isolierungsvorrichtung (4), insbesondere nach einem der Ansprüche 1 bis 10.

12. Elektrische Maschine, insbesondere ein Elektromotor oder ein Generator, mit einer stator- und/oder rotorseitigen Isolierungsvorrichtung (4) nach zumindest einem der Ansprüche 1 bis 10.
